# EUROPEAN PATENT APPLICATION

(11) **EP 4 167 441 A1**
(43) Date of publication of application: **19.04.2023**
(21) Application number: 21202985.4
(22) Date of filing: 15.10.2021
(51) Int. Cl.: H02K 3/24, H02K 9/22, H02K 5/18

(54) **END WINDING HEAT CONDUCTOR COMPONENTS**

(71) Applicant: Lilium eAircraft GmbH, 82234 Wessling (DE)
(72) Inventor: SWEIDAN, Hamish, 82234 Wessling (DE); SHORTTE, Maurice, 82234 Wessling (DE); LAVEAU, Benoit, 82234 Wessling (DE)
(74) Representative: Feller, Frank

(57) **Abstract**

Electric engine (10), in particular electric aircraft engine, comprising a ring-shaped stator core (12) and a rotor rotatably supported within the stator core (12), wherein the stator core (12) has a plurality of radially inward-facing teeth (14) and a plurality of windings (16) wound around each of the teeth (14) to form individual coils (18), wherein the windings (16) of each coil (18) have active portions (22) between adjacent teeth (14) and end winding portions (20) arranged at axial ends of each teeth (14), and wherein at least one thermally conductive heat extraction component (26) is provided at the end winding portions (20).

## Description

The present invention relates to an engine, in particular an aircraft engine. The invention also relates to a method for manufacturing an engine.

Electric engines, which transfer electrical into mechanical energy, commonly comprise a stator and a rotor. During operation, windings arranged in the stator generate an electromagnetic field to drive the rotor, which is housed within the stator. Depending on size and power of such engines, they produce a significant amount of heat. To reduce the risk of damages caused by overheating, in particular thermal degradation, thermal management is a key criterion when designing such machines. Commonly, the majority of heat generated in the windings is transported to the housing of the engine by conduction through the stator core, as the windings are arranged in contact with the stator core. Consequently, such windings are among the hottest areas during operation of an electric engine. Efficient heat transfer through the windings is challenging, because of the air gap between the windings and the surrounding portions as well as the presence of an insulating coating or impregnation applied on the copper wires, which form the windings. Both effects impede the conduction of heat within the engine, resulting in a significant thermal gradient between internal and external regions of an electric engine.

To enhance heat transfer and thus heat extraction from an engine, various approaches are disclosed in the prior art. US 2018/0115222 A1 shows a device for an electric engine, including a rotor, a stator and windings, wherein a cooling member is interposed between two individual stator teeth. Such a cooling member is in thermally conductive contact with a back portion of the stator to facilitate heat transfer from the interior of the engine towards the exterior and the housing. However, the cooling member is only in contact with a specific portion of the windings, resulting in untapped potential for further optimization of the thermal conductivity. Additionally it occupies valuable volume in the active electromagnetic portion of a motor (space between individual stator teeth) that would otherwise be used for additional core or winding material, thereby reducing the performance of the motor, hence requiring a larger motor, leading to an increase in size and mass.

Furthermore, US 2007/0273225 A1 discloses a method for manufacturing an electric engine, wherein a potting compound is introduced into the air gap between the windings and a heat sink, such as the housing. Therefore, an increased thermal conductivity of the compound with respect to air is achieved. Although cooling effects can be enhanced by implementing such potting compounds, they often consist of polymers exhibiting relatively low thermal conductivities, and are only in contact with the outermost faces of the windings, hence providing only minor improvements in terms of heat extraction from an electric engine.

While the issue of insufficient heat transfers persists for all types of electric engines, it is especially pronounced for aircraft engines. These engines display an increased level of complexity with respect to functionality and manufacturing, which substantially affects production and maintenance costs. To be able to lift the mass of an aircraft, their engines need to be particularly powerful. Furthermore, engine size and mass significantly influence flight characteristics of an aircraft, resulting in a desire to reduce both, size and mass, which inherently increases power density and thereby requires improved heat extraction methods.

It is therefore an object of the present invention to provide an electric engine with a stator core and a rotor, which on one hand exhibits substantially enhanced heat transfer through windings associated with the stator core, while on the other hand being relatively easy to manufacture. It is a further object of the present invention to provide a method for manufacturing such an engine.

According to a first aspect of the present invention, the engine, in particular the aircraft engine, comprises a cylinder-shaped stator core and a rotor rotatably supported within the stator core, wherein the stator core has a plurality of radially inward-facing teeth and a plurality of windings wound around each of the teeth to form individual coils, wherein the windings of each coil have active portions between adjacent teeth and end winding portions arranged at axial ends of each teeth, and wherein at least one thermally conductive heat extraction component is provided at the end winding portions.

Thus, by combining a thermally conductive heat extraction component with the windings of a coil, heat generated in the windings within the interior of the stator core can be efficiently conducted towards external regions, such as the housing of the engine, resulting in the formation of a heat conduction path and thereby an optimized cooling of the windings and the engine, respectively. Additionally, air gaps between the windings and a heat sink can be minimized, leading to a further improvement of heat transfer through the arrangement, as the thermal conductivity of the heat extraction component is preferably significantly higher than the thermal conductivity of air. Similarly, due to the low thermal conductivity of polymers, which are commonly used as potting compounds, a heat extraction component may be employed to fill the space between individual windings and possibly between windings and the housing instead of a potting compound. In general, the provided configuration can be applied to any electric engine and not only to an aircraft engine.

As a coil consists of a plurality of windings, a single heat extraction component is preferably configured to directly contact several windings along its extending direction. The extending direction of a heat extraction component is in particular aligned with the extending direction of an associated stator tooth, resulting in a radial configuration of the heat extraction component with respect to the stator core. The heat extraction component can be further arranged to overlap with the windings, such that its inward-facing end is aligned with a radially inboard portion of a coil, whereas its upper end extends outward of the coil.

The number of radially inward-facing teeth of the stator core may vary depending on the size of the engine and the stator core, respectively, wherein independently of the stator core size every stator tooth is associated with an individual coil. Consequently, a plurality of heat extraction components may be provided within the stator core to not only locally decrease the thermal gradient, but throughout the whole stator core. Preferably, the heat extraction components are provided only at the end winding portions, whereby the active magnetic regions of the stator core (i.e. the space between the stator teeth) are not affected by the heat extraction components. Hence, the present invention does not impede the performance of the motor of an electric engine by occupying valuable space in the active region, but exclusively enhances its efficiency.

In an additional embodiment of the present invention, the at least one heat extraction component is provided between windings of the same coil and/or between the teeth and the adjacent windings. Further, the heat extraction component may also be attached to the outermost windings of a coil. Such a configuration allows for a maximum amount of thermal conduction components in the arrangement, resulting in an improved thermal conductivity within the stator core.

Optionally, each coil of the engine according to the present invention, comprises a plurality of winding layers stacked on top of each other, wherein each winding layer comprises a plurality of windings arranged side by side such as to have substantially equal distance from the associated tooth around which the windings are wound. Thereby, each coil substantially forms a multi-layered assembly, with uniform gaps between the layers. Depending on the amount of stacked layers and the amount of windings arranged side by side, the magnitude of the electromagnetic field can be tuned, ultimately affecting the power of the engine.

In a preferred embodiment of the present invention, the at least one heat extraction component may be interposed between and in direct contact with two adjacent winding layers of the same coil. Heat transfer can be significantly enhanced due to the insertion of the heat extraction component between two winding layers, as the heat is conducted directly from the copper wires of the windings to the heat extraction component. Additionally, the heat extraction component is preferably shaped according to the gap between the winding layers, to maximize the contact surface between heat extraction component and winding layers.

Alternatively, more than two winding layers and a plurality of interposed heat extraction components can be associated with a tooth. For every two winding layers a heat extraction component can be interposed, resulting in an arrangement of a plurality of heat extraction components for every associated stator tooth. Ultimately, the amount of heat extraction components is not restricted to a specific number, but may be adjusted as desired, depending on the size of the stator core and the number of associated stator teeth, respectively. With an increased amount of provided heat extraction components, heat transfer through the windings can further be enhanced.

In another embodiment of the engine according to the present invention, the at least one heat extraction component can be provided in a direction perpendicular to the winding direction of the windings. Thus, it can be ensured that in case a plurality of heat extractions components is provided all of the heat extraction components may transfer heat away from the windings and into the same direction, wherein the corresponding direction is associated with the extending direction of the individual stator teeth. Additionally, by inserting the heat extraction component in a direction perpendicular to the winding direction, the contact surface between heat extraction component and winding layers can be maximized, leading to enhanced cooling effects of the windings.

In particular, a potting compound is provided such as to cover the teeth, the plurality of windings and the at least one heat extraction component. Hence, the potting compound, which is applied during a potting process, may fill any remaining gaps within the winding assembly including the heat extraction component. Accordingly, potting is preferably carried out after the heat extraction component has been interposed between the winding layers. Due to the presence of the potting compound, the winding layers and especially the heat extraction component can be supported and connected to their associated stator tooth, thereby increasing their resistance against vibrations or external forces caused by the operation of the engine. As a result, permanent direct contact between heat extraction component and winding layers can be ensured, leading to a constant heat transfer during operation of the engine. Preferably, the potting compound exhibits a high thermal conductivity, such that the difference between heat extraction component and potting compound with respect to thermal conductivity is as low as possible.

In an alternative embodiment of the engine according to the present invention, the at least one heat extraction component may be configured to protrude from the potting compound. Preferably, the heat extraction component protrudes from the potting compound towards the external regions of the stator core, to conduct the generated heat away from the winding assembly and the potting compound. However, the heat extraction component may also protrude from the potting compound in any direction, such as radially inwards or axially outwards. By protruding from the potting compound, the heat extraction component can be readily associated with its surrounding to further enhance the conduction of heat, for instance towards the housing of the engine.

Optionally, the at least one heat extraction component is configured to be connected to a heat sink. Thus, the heat extraction component can be connected to a heat sink on its radially outward-facing end, which can protrude from the potting compound. In particular, the conducted heat is sunk in the heat sink by moving away from hotter regions to colder region due to natural conduction. The heat sink may be configured to comprise a fluid, such as air or an oil, which ultimately sinks the heat generated by the engine. Optionally, the heat extraction component may extend directly into the fluid. The employed fluid is preferably cooled by airflow caused by travelling of the machine comprising the engine, such as an aircraft. The heat sink can further be a member with an increased surface, such as a metallic member to which the heat extraction component may be physically joined by fastening or welding, or the stator core itself. As a result, providing a heat sink to which the heat extraction component is connected may lead to a substantially enhanced extraction of heat from the engine, thereby cooling the windings.

In a preferred embodiment of the engine according to the present invention, a thickness of a single heat extraction component can be substantially equal to a distance between two adjacent windings layers. Preferably, the heat extraction component accurately fits into the gap between two adjacent winding layers, which enables direct contact between the windings of both winding layers and the heat extraction component. Therefore, heat transfer from the windings to the heat extraction component can be enhanced. The windings may also act as a support for the heat extraction component, whereby the heat extraction component can be fixed in its position between two winding layers even without the additional use of a potting compound.

In particular, the at least one heat extraction component is made from a thermally conductive material, wherein the thermal conductivity of the at least one heat extraction component is greater than the thermal conductivity of the potting compound. The material could for example be copper, graphite, or a phase change conductor such as a heat pipe or vapor chamber. Metals, such as aluminum, are preferably employed, as they do not only have high thermal conductivities, but are also durable and often ductile, rendering them resistant towards mechanical forces, such as vibrations. Additionally, they possess high melting points, which is especially important in a high temperature environment. Specifically aluminum is cost-effective and readily available, and may thus be considered as the preferred material for the heat extraction component. If a potting compound is applied, the thermal conductivity of aluminum remains substantially higher than any of the common potting materials.

In another embodiment of the engine according to the present invention, the at least one heat extraction component may have a coating, wherein the coating is made of an insulating material. According to the insulation of the winding wires, the heat extraction component is preferably coated with an insulating material to provide electrical insulation and short circuit protection. Ideally, the coating exhibits a high thermal conductivity, such that the difference between heat extraction component and coating with respect to thermal conductivity is as low as possible. Consequently, the heat extraction component in combination with its insulating coating may have a dual function, namely conducting heat and providing short circuit protection.

While the engine according to the present invention may be preferably employed in different types of machines, a particularly suitable use case is an aircraft, comprising engines with a rotor and a stator core as well as windings according to the present invention. Corresponding engines may represent ducted fan engines, which can in particular be used in electrical propulsion aircrafts with vertical takeoff and landing (VTOL) ability.

According to a second aspect of the present invention, a method is provided for manufacturing an engine comprising steps of (a) winding a plurality of windings around teeth associated with a cylinder-shaped stator core to form individual coils, and inserting at least one heat extraction component between two adjacent windings of each coil, such that the heat extraction component is in direct contact with the windings, or (b) winding a plurality of windings around teeth associated with a cylinder-shaped stator core to form individual coils and enveloping at least one interposed heat extraction component, such that the heat extraction component is integrated in the windings.

The engine manufactured according to the second aspect of the present invention can be provided by two different alternatives, wherein both alternatives are in particular based on winding a plurality of windings around associated stator teeth. According to alternative (a) the heat extraction component can be inserted into an air gap between two adjacent windings after the individual coils have been wound to directly contact the windings, thereby forming a heat conduction path. According to alternative (b) the heat extraction component can be provided during the winding of the coils, such that the heat extraction component is integrated in the windings. While the technical outcome of both alternatives is identical, one alternative might be more beneficial than the other, depending on the size of the stator core and the dimensions of the employed windings as well as the heat extraction component, respectively. With respect to manufacturing and material costs, the implementation of the heat extraction component can be considered as insignificant, as current technologies provide means to manipulate winding assemblies in stator cores.

Preferably, the method further comprises providing a potting compound such as to cover the teeth, the plurality of windings and the at least one heat extraction component, wherein the thermal conductivity of the heat extraction component is greater than the thermal conductivity of the potting compound, and wherein the heat extraction component is configured to protrude from the potting compound, and providing a heat sink configured to be associated with the at least one heat extraction component at the protruding end of the heat extraction component.

By implementing a potting compound, the structural strength of the assembly can be enhanced, such that the heat extraction component is secured within the windings. Therefore, the resistance of the heat extraction component towards vibrations and external forces is increased. Due to the use of metallic heat extraction components, such as heat extraction components made from aluminum, it is in particular ensured that heat is efficiently transferred from the windings and the surrounding potting compound into the direction of a heat sink by the protruding heat extraction component. The heat extraction component may further be connected to a heat sink at its protruding end, wherein the heat sink can be a fluid, such as air or oil, an additional metallic member, or the stator core itself. Ultimately, the method provides an engine with an optimized thermal management, such that the heat generated in the internal regions is efficiently conducted to a heat sink in the external region of the engine by means of heat extraction components. As a result, resistance of the engine towards thermal degradation is enhanced, which positively affects the engine's lifetime and reduces maintenance. Additionally, size and mass of such an engine may potentially be reduced, which in turn reduces the overall energy consumption of a machine, such as an aircraft, comprising the engine.

Additional features and advantages of the present invention will become even clearer from the following description of embodiments thereof, when taken together with the accompanying figures, which show in particular:
- Fig. 1: an exemplary embodiment of a stator core assembly including windings in a perspective view;
- Fig. 2: a schematic representation of a stator core viewed from direction F (shown in Fig. 1), showing only one of many coils in place;
- Fig. 3: a schematic representation of a stator tooth including windings in a front view;
- Fig. 4: a schematic representation of thermally conductive heat extraction components arranged adjacently to windings according to the invention;
- Fig. 5: a perspective view of a heat extraction component-winding arrangement according to the invention;
- Fig. 6: a perspective view of a heat extraction component-winding arrangement including potting according to the invention;
- Fig. 7: a perspective view of a heat extraction component-winding arrangement according to the invention connected to a heat sink.

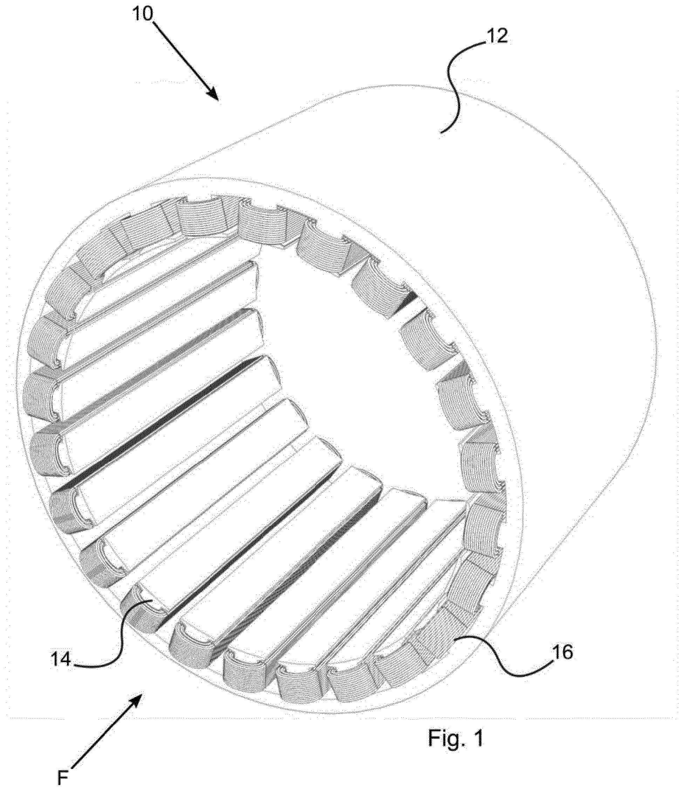

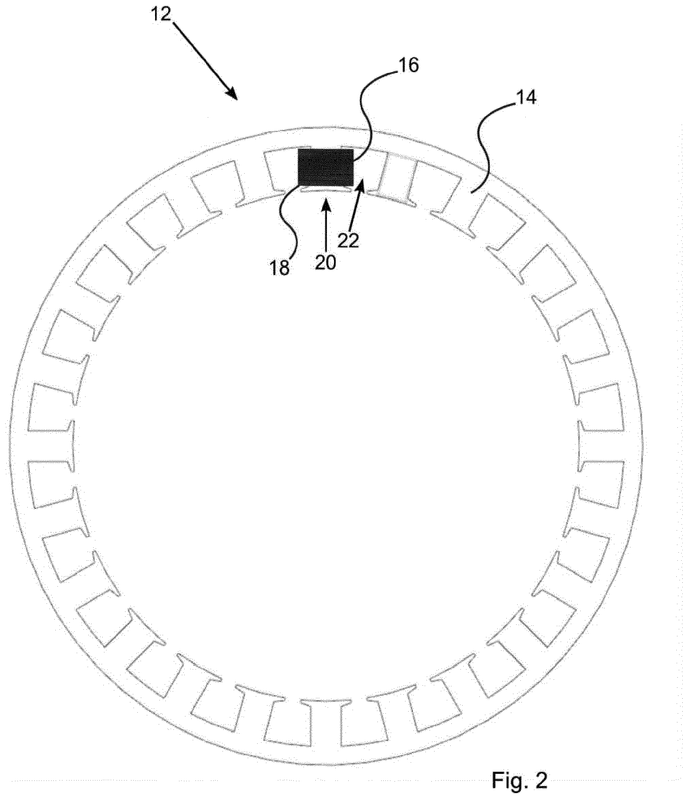

In Fig. 1, an exemplary embodiment of a stator core assembly including windings is depicted in a perspective view, wherein the assembly is considered part of an engine according to the invention. The stator core assembly, which is in particular an electrically ducted fan of an aircraft, wherein the aircraft can be a vertical take-off and landing (VTOL) aircraft, is generally denoted with the reference numeral 10. An operative engine commonly comprises a rotor rotatably supported within the stator core 12, however, such a rotor is not shown in Fig. 1 for reasons of simplicity. To house the rotor, the stator core 12 may be provided as a hollow cylinder. The inner surface of the stator core 12 can be covered by a plurality of radially inward-facing and axially elongated stator teeth 14, which are only partially depicted in Fig. 1. A plurality of windings 16 may be wound around each of the stator teeth 14, thereby forming coils 18 (indicated in Fig. 2) that are configured to induce an electromagnetic field to drive the rotor. Commonly, copper wires are used to form the windings 16. Arrow F indicates the view direction of Fig. 2.

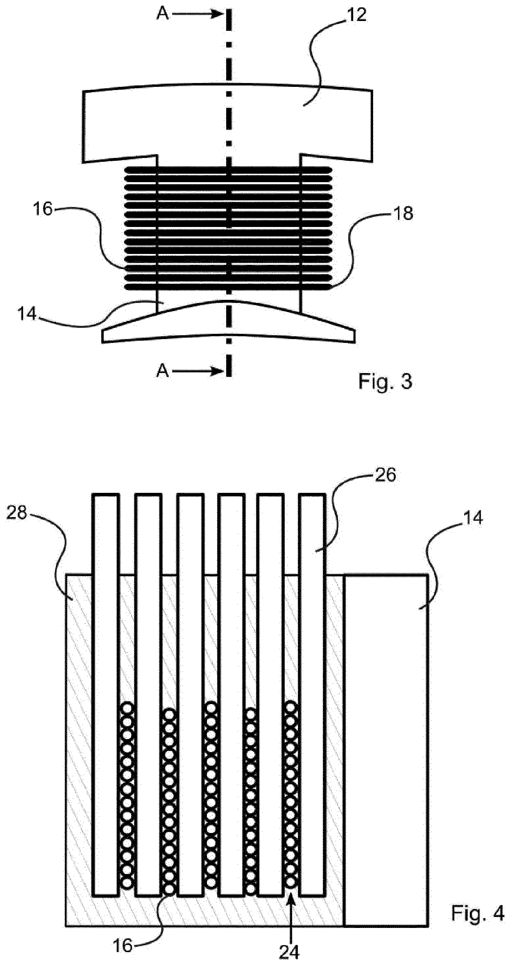

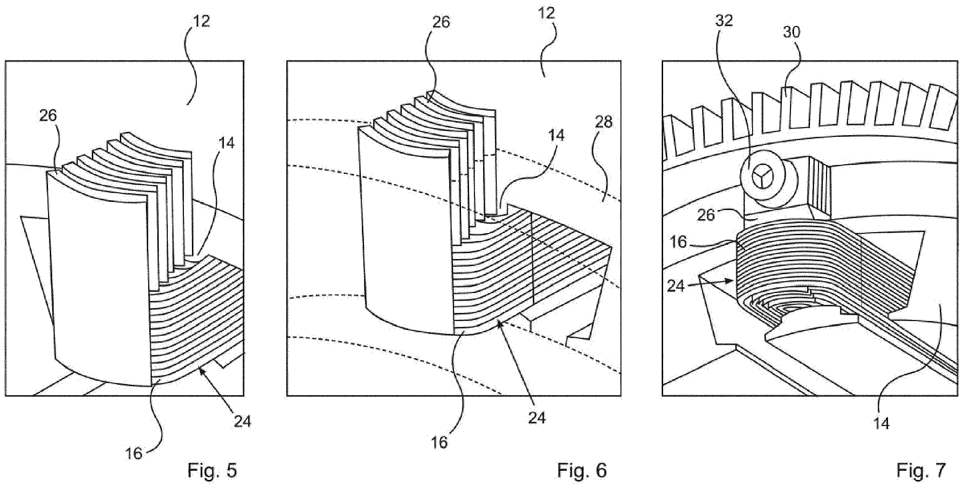

With respect to the present invention, a wire wound around a stator tooth 14 for a single time defines a winding 16. By repeating the winding of the wire around the stator tooth 14 for multiple times, a winding layer 24 (shown in Fig. 4 - 7) is formed, wherein the windings 16 of a single winding layer 24 are arranged side by side to each other and along the extending direction of the associated stator tooth 14. Further, by providing at least one winding layer 24, an individual coil 18 is defined, wherein the coil 18 can consist of a plurality of winding layers 24, as shown in Fig. 4 - 7. The winding layers 24 of each coil 18 may be uniformly spaced apart from each other. At the axial ends of the stator teeth 14, the coils 18 protrude from the stator core 12 in axial direction, as shown in Fig. 5 - 7. Hence, these axial ends define end winding zones or portions 20, wherein a single coil 18 can consist of several end winding portions 20, depending on the amount of winding layers 24 in the coil 18. In contrast to the end winding portions 20, active zones or portions 22 are located between two adjacent stator teeth 14 and extend along the axial extending direction of the corresponding stator teeth 14. The magnitude of the electromagnetic field generated in an active portion 22 relates to the amount of winding layers 24 in the corresponding coil 18.

Fig. 2 shows a cross-sectional view of a cylinder-shaped stator core 12, highlighting the arrangement of stator teeth 14 and associated windings 16. The teeth 14 are provided in a densely-packed annular configuration on the inner surface of the stator core 12, wherein each of the teeth 14 may have a plate-like end facing the center of the hollow stator core 12 to support the windings 16. Accordingly, the individual windings 16 are preferably provided between the radially outward extending end being connected to the stator core 12 as well as the plate-like end of each tooth 14, and may be wound around the corresponding stator tooth 14 along its extending direction to form an individual coil 18. It should be noted that although only a single coil 18 made from windings 16 associated with a tooth 14 is depicted in Fig. 2, a plurality of coils 18 respectively windings 16 can be provided within the stator core 12. Similarly, the amount of stator teeth 14 can be varied and is not restricted to the specific amount shown in Fig. 2.

A front view of a stator tooth 14 associated with the stator core 12 is depicted in Fig. 3. The schematic representation of Fig. 3 is in particular a close-up of a single stator tooth 14 as shown in Fig. 2. Wound around the stator tooth 14 is a plurality of windings 16 forming a winding layer 24 and accordingly an individual coil 18. Identical to the representation shown in Fig. 2, the windings 16 are located between the stator core 12 and the plate-like end of the stator tooth 14. With respect to the present invention, the amount of windings 16 forming an individual coil 18 can be varied and is not limited to the representation as shown in Fig. 3.

In Fig. 4, a schematic representation of thermally conductive heat extraction components 26 arranged adjacently to windings 16 associated to the stator tooth 14 according to the invention is depicted. The arrangement shown in Fig. 4 corresponds to the cross-section of the A-A axis of Fig. 3. It can be seen that a plurality of windings 16 can be combined to form a winding layer 24, wherein a single stator tooth 14 may be associated with five winding layers 24, forming an individual coil 18. However, the amount of windings 16 forming a single winding layer 24 as well as the amount of winding layers 24 associated with a tooth 14 is variable and not limited to the representation as shown in Fig. 4. Therefore, at least one winding layer 24 can be associated with a stator tooth 14. The winding layers 24 are in particular adjacently arranged to each other and the windings 16 of every individual winding layer 24 have a substantially equal distance from the associated tooth 14 around which they are wound.

Interposed between two adjacent winding layers 24 and attached to the winding layer 24 closest to the stator tooth 14 as well as to the outermost winding layer 24 are thermally conductive heat extraction components 26, which can fully extend into the winding layers 24. The heat extraction components 26 consist of a material with high thermal conductivity, such as aluminum, and are preferably coated with an insulating material providing short circuit protection. The amount of interposed heat extraction components 26 equals to the amount of winding layers, with one of the components 26 being interposed between the stator teeth 14 and the innermost winding layer 24. Further, an additional heat extraction component 26 can be attached to the outermost winding layer 24. However, the amount of components 26 can be varied nonetheless, such that at least one heat extraction component 26 is provided. According to Fig. 4, the heat extraction components 26 are vertically aligned with the stator tooth 14 and protrude from the winding layers 24. As the heat extraction components 26 are in direct contact with their adjacent winding layers 24, heat generated by the corresponding coil 18 can be efficiently conducted by the heat extraction components 26.

The embodiment of Fig. 4 additionally comprises a potting compound 28, provided to cover the gaps between stator tooth 14, windings 16 and thermal extraction components 26. The potting compound 28 may be an epoxy resin, which can be added to the assembly in a viscous state after the windings 16 are wound and the heat extraction components are inserted between the winding layers 24. The potting compound 28 provides additional stability and rigidity to the coil assembly including the heat extraction components 26 and exhibits an enhanced thermal conductivity with respect to air, thereby improving the overall heat conductivity of the assembly. The configuration of Fig. 4 highlights that the heat extraction components 26 protrude not only from the winding layers 24 but also from the potting compound 28. Hence, the heat extraction components 26 may be connected to another member, such as a heat sink 30 (shown in Fig. 7), at their protruding ends to conduct the generated heat away from the windings 16 and towards cooler regions of the engine 10.

Fig. 5 shows an arrangement of heat extraction components 26 in combination with winding layers 24 according to the present invention. In the embodiment, four heat extraction components 26 are interposed between adjacent winding layers 24 while one heat extraction component 26 is interposed between the winding layer 24 and the stator tooth 14 and one heat extraction component 26 is attached to the outermost winding layer 24. To obtain the configuration shown in Fig. 5, the heat extraction components 26 may be inserted into the winding layers 24 after the layers 24 have been wound. Optionally, the heat extraction components 26 may be provided before the windings 16 are wound around the stator tooth 14, such that the heat extractions components 26 are enveloped and integrated into the assembly during the winding process. The embodiment further highlights that the heat extraction components 26 can be provided at end winding portions 20 arranged at an axial end of a stator tooth 14.

As the individual windings 16 of their associated winding layer 24 are equally distanced from the stator tooth 14, a single heat extraction component 26 can be fittingly inserted into the gap between two adjacent winding layers 24. Accordingly, in order to directly contact the winding layers 24, the thickness of the heat extraction components 26 may be configured to correspond to the width of the gap between two winding layers 24. It can be seen from Fig. 5 that the heat extraction components 26 are inserted into the winding layers 24 perpendicular to the winding direction of the windings 16. However, the heat extraction components 26 may also be inserted in a tilted manner, if desired. In particular, the heat extraction components 26 are slightly bent to match the characteristics of the associated winding layers 24 respectively the associated coil 18, thereby maximizing the contact area between the winding layers 24 and the heat extraction components 26.

The embodiment of Fig. 6 depicts a perspective view of a heat extraction component-winding arrangement including a potting compound 28 according to the invention. While the configuration of the heat extraction components 26, the winding layers 24 in combination with their associated stator tooth 14 remains identical to the embodiment of Fig. 5, a potting compound 28 is provided in the vicinity of the assembly. It becomes evident that the potting may be provided exclusively in the region of the stator core 12 and thus, does not extend towards the rotor of the engine 10. Furthermore, the heat extraction components 26 are preferably configured to protrude from the potting compound 28 towards external regions of the stator core 12 respectively the engine 10.

Fig. 7 shows a perspective view of a heat extraction component-winding arrangement according to the invention connected to a heat sink 30. A plurality of heat extraction components 26 associated with a plurality of winding layers 24 according to the embodiments of Fig. 5 and 6 is joined to a fastening element 32 at the protruding end of the heat extraction components 26 by fastening, wherein the heat extraction components 26 might also be connected to the heat sink 30 by welding. The fastening element 32 is further connected to a heat sink 30. The heat sink 30, which commonly exhibits an enhanced surface area to promote the convection of heat, may be provided as a metallic member with a high thermal conductivity. However, the heat conducted by the heat extraction components 26 may also be transferred into a fluid, such as air or an oil, or to the stator core 12. In Fig. 7, the outermost and the innermost heat extraction components 26 are absent. Nonetheless, they could be implemented according the configurations shown in Fig. 4 - 6.

In the following, enhanced heat transfer from a coil to a heat sink 30 according to the present invention is described in detail.

During operation of an engine 10, the windings 16 arranged in the stator core 12 create an electromagnetic field in the active portions 22 to drive the rotor, thus generating a substantial amount of heat. Without the heat extraction components 26 according to the present invention and a potting compound 28, the generated heat can solely be conducted away from the windings 16 by means of the stator teeth 14 and the stator core 12. However, due to the air gap between the coil 18 and the stator teeth 14, heat is poorly transferred from the windings 16 to the teeth 14. Furthermore, an insulating coating or impregnation of the copper wires forming the windings 16 further impedes the heat conductivity of the assembly. Consequently, a significant heat gradient between the internal regions of the engine 10 and its external parts, such as the housing, is induced. Such a gradient may have detrimental effects on the performance of the engine and damages caused by overheating may occur.

If heat extraction components 26 according to the present invention are provided in direct contact with the winding layers 24 at the end winding portions 20, heat is efficiently conducted from the windings 16 towards the outer regions of the stator core 12 and thus the thermal gradient is reduced. The heat extraction components 26 can be configured to extend towards a desired part of the engine 10, such as a heat sink 30. Due to a potential potting, the heat extraction components 26 can be supported, thereby increasing their resistance towards vibrations and other external physical forces. Furthermore, by connecting the heat extraction components 26 to a heat sink 30, a heat extraction path can be formed, which consistently conducts and ultimately sinks the heat generated by the windings 16. Such a heat sink 30 could be the housing of the engine 10 or a designated metallic member with a particularly high surface area. These members might be cooled by airflow, originating from the movement of a vehicle, such as an aircraft, associated with the engine 10 to further enhance the efficiency of the heat sink 30 and therefore optimize the heat extraction path formed by the heat extraction components 26.

## Claims

1. Electric engine (10), in particular electric aircraft engine, comprising a cylinder-shaped stator core (12) and a rotor rotatably supported within the stator core (12), wherein the stator core (12) has a plurality of radially inward-facing teeth (14) and a plurality of windings (16) wound around each of the teeth (14) to form individual coils (18), wherein the windings (16) of each coil (18) have active portions (22) between adjacent teeth (14) and end winding portions (20) arranged at axial ends of each teeth (14),
**characterized in that,**
at least one thermally conductive heat extraction component (26) is provided at the end winding portions (20).

2. Engine (10) according to claim 1, wherein the at least one heat extraction component (26) is provided between windings (16) of the same coil (18) and/or between the teeth (14) and the adjacent windings (16).

3. Engine (10) according to claim 1, wherein each coil (18) comprises a plurality of winding layers (24) stacked on top of each other, wherein each winding layer (24) comprises a plurality of windings (16) arranged side by side such as to have substantially equal distance from the associated tooth (14) around which the windings (16) are wound.

4. Engine (10) according to claim 3, wherein the at least one heat extraction component (26) is interposed between and in direct contact with two adjacent winding layers (24) of the same coil (18).

5. Engine (10) according to claim 4, wherein more than two winding layers (24) and a plurality of interposed heat extraction components (26) are associated with a tooth (14).

6. Engine (10) according to at least one of the preceding claims, wherein the at least one heat extraction component (26) is provided in a direction perpendicular to the winding direction of the windings (16).

7. Engine (10) according to at least one of the preceding claims, wherein a potting compound (28) is provided such as to cover the teeth (14), the plurality of windings (16) and the at least one heat extraction component (26).

8. Engine (10) according to claim 7, wherein the at least one heat extraction component (26) is configured to protrude from the potting compound (28).

9. Engine (10) according to at least one of the preceding claims, wherein the at least one heat extraction component (26) is configured to be connected to a heat sink (30).

10. Engine (10) according to claim 4, wherein a thickness of a single heat extraction component (26) is substantially equal to a distance between two adjacent windings layers (24).

11. Engine (10) according to claim 7, wherein the at least one heat extraction component (26) is made from a thermally conductive material, such as aluminum, and wherein the thermal conductivity of the at least one heat extraction component (26) is greater than the thermal conductivity of the potting compound (28).

12. Engine (10) according to at least one of the preceding claims, wherein the at least one heat extraction component (26) has a coating, wherein the coating is made of an insulating material.

13. Aircraft, comprising at least one engine (10) according to claims 1 to 12.

14. Engine (10) according to claims 1 to 12, wherein the engine (10) is an electrically ducted fan and the aircraft according to claim 13 is a vertical take-off and landing, VTOL, aircraft.

15. Method for manufacturing an engine (10) comprising the following steps:
(a) winding a plurality of windings (16) around teeth (14) associated with a cylinder-shaped stator core (12) to form individual coils (18); and
inserting at least one heat extraction component (26) between two adjacent windings (16) of each coil (18), such that the heat extraction component (26) is in direct contact with the windings (16); or
(b) winding a plurality of windings (16) around teeth (14) associated with a cylinder-shaped stator core (12) to form individual coils (18) and enveloping at least one interposed heat extraction component (26), such that the heat extraction component (26) is integrated in the windings (16).

16. Method according to claim 15, wherein the method further comprises:
providing a potting compound (28) such as to cover the teeth (14), the plurality of windings (16) and the at least one heat extraction component (26), wherein the thermal conductivity of the heat extraction component (26) is greater than the thermal conductivity of the potting compound (28), and wherein the heat extraction component (26) is configured to protrude from the potting compound (28); and
providing a heat sink (30) configured to be associated with the at least one heat extraction component (26) at the protruding end of the heat extraction component (26).
